(19) Europäisches Patentamt
European Patent Office
Office européen des brevets

(11) **EP 3 084 465 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(21) Anmeldenummer: **14808989.9**

(22) Anmeldetag: **05.12.2014**

(51) Int Cl.:
***G01S 7/527*** *(2006.01)*

(86) Internationale Anmeldenummer:
**PCT/EP2014/076721**

(87) Internationale Veröffentlichungsnummer:
**WO 2015/091023 (25.06.2015 Gazette 2015/25)**

(54) **VERFAHREN ZUR VERARBEITUNG EINES ECHOSIGNALS EINES ULTRASCHALLWANDLERS**

METHOD FOR PROCESSING AN ECHO SIGNAL OF AN ULTRASONIC TRANSDUCER

PROCÉDÉ DE TRAITEMENT D'UN SIGNAL D'ÉCHO D'UN TRANSDUCTEUR ULTRASONORE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2013 DE 102013226085**

(43) Veröffentlichungstag der Anmeldung:
**26.10.2016 Patentblatt 2016/43**

(73) Patentinhaber: **Elmos Semiconductor Aktiengesellschaft**
**44227 Dortmund (DE)**

(72) Erfinder: **SPIEGEL, Egbert**
**44227 Dortmund (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**EP-A2- 1 296 159**

**Beschreibung**

Die Erfindung betrifft ein Verfahren zur Verarbeitung eines Echosignals eines Ultraschallwandlers, das dieser bei Empfang eines Ultraschallsignals erzeugt. Dabei erfolgt die Verarbeitung des Echosignals insbesondere unter dem Aspekt der Detektion von solchen Echos, die auf interessierende Reflektionsobjekte zurückzuführen sind, welche ein zuvor ausgesendetes Ultraschall-Detektionssignal zum Ultraschallwandler reflektieren.

Ultraschallwandler in der zuvor genannten Applikation werden beispielsweise für die Abstandsmessung im Automotive-Bereich eingesetzt. Ein Beispiel für eine derartige Anwendung ist eine Einparkhilfe für Fahrzeuge. Dabei sendet ein Ultraschallsender Ultraschall-Burst-Signale, also Ultraschall-Pulspaketsignale aus, wobei mittels eines Ultraschallempfängers überprüft wird, inwieweit ein zuvor ausgesendetes Ultraschallsignal nach einer Reflektion empfangen wird. Aus der Signallaufzeit kann dann auf den Abstand eines beispielsweise Hindernisses zum Fahrzeug geschlossen werden.

Eine Schwierigkeit hierbei besteht darin, in dem reflektierten, empfangenen Echosignal Echos zu erkennen. Dies kann insbesondere dann problematisch sein, wenn zwei oder mehrere Echos kurzzeitig aufeinanderfolgend detektiert werden.

Es existieren verschiedene Vorgehensweisen, um die Störempfindlichkeit der zuvor genannten Systeme zu reduzieren. Hier arbeitet man beispielsweise mit dynamischen Schwellen, um Nutz-Echos von Stör-Echos zu unterscheiden. Eine weitere Vorgehensweise zur zuverlässigeren Auswertung von Echosignalen eines Ultraschallwandlers ist in DE-A-10 2011 086 397 beschrieben. Hierbei werden die Echos von codierten Ultraschallsendesignalen empfangen, wobei zur Auswertung Korrelationsverfahren verwendet werden und das so gebildete Signal im Sinne eines Echosignals mit einem Schwellwert verglichen wird, um ein Echo zu detektieren. Bei diesem bekannten Verfahren kann eine Signalverarbeitung derart erfolgen, dass in einem Vorprozessor das (Korrelations-)Signal differenziert und gleichgerichtet und anschließend durch Multiplikation mit dem (Korrelations-)Signal ein Produktsignal erzeugt wird. In DE-A-10 2011 086 397 ist keine Filterung des Ableitungssignals mit Nullsetzung von positiven/negativen Abschnitten bei der Signalverarbeitung beschrieben.

Aus EP-A-0 142 733 ist ein Ultraschall-Entfernungsmesser bekannt, der anhand der Laufzeit bis zum Empfang der reflektierten Ultraschallwellen die Entfernung zum Boden misst. Bei der Messung nach EP-A-0 142 733 wird zur exakten Zeitmessung das Erreichen einer bestimmten Steigung der Hüllkurve der Empfangssignale verwendet. EP-A-0 142 733 beschreibt ein konventionelles Verfahren, bei dem ein Ultraschallwandler reflektierte Echosignale empfängt und anhand eines Amplitudenschwellwertes ein Echo detektiert. Hierbei wird alternativ eine zeitliche Ableitung der Echohüllkurve gebildet und die Echodetektion erfolgt anhand der Signalflanke auf Basis eines Vergleichs der Ableitung gegenüber einem Schwellwert, wobei daneben auch eine Detektion anhand der zweiten zeitlichen Ableitung beschrieben wird. In EP-A-0 142 733 ist keine Filterung des Ableitungssignals und Multiplikation des Ableitungssignals mit dem Echosignal bei der Signalverarbeitung beschrieben.

US-A-4 243 988 beschreibt für ein Pulsradarsystem eine Verbesserung bei der Winkelauflösung. Hierbei wird bei der Signalverarbeitung die zweite Ableitung der Signalintensität über den Richtungswinkel gebildet, um die Winkelauflösung zu erhöhen. US-A-4 243 988 beschreibt ein Verfahren, bei dem das Echosignal zweifach differenziert wird, mit dem verzögerten Echosignal addiert, gewichtet und zur Exponentialfunktion erhoben wird und anschließend mit dem Echosignal multipliziert wird, um ein Signal mit einer verbesserten Winkelauflösung zu erhalten. Bei dem bekannten Verfahren erfolgt keine Filterung des zeitlichen Ableitungssignals eines Ultraschallempfangssignals mit Nullsetzung von positiven/negativen Abschnitten bei der Signalverarbeitung.

EP-A-1 296 159 beschreibt ein Verfahren zur Verarbeitung eines Echosignals eines Ultraschallwandlers bei Empfang eines Ultraschallsignals mit den Schritten des Bildens der zeitlichen Ableitung des Zeitverlaufs des Echosignals zur Erzeugung eines Ableitungssignals, des Filterns des Ableitungssignals zur Bildung eines Unipolar-Signals und des Multiplizierens des Echosignals mit dem Unipolar-Signal zur Erzeugung eines Ausgangssignals.

Aufgabe der Erfindung ist es, die Zuverlässigkeit der Verarbeitung von Echosignalen eines Ultraschallwandlers weiter zu verbessern, um die Detektion von Echos präzise durchführen zu können, und zwar insbesondere dann, wenn mehrere Echos kurzzeitig aufeinanderfolgen.

Zur Lösung dieser Aufgabe wird mit der Erfindung ein Verfahren zur Verarbeitung eines Echosignals eines Ultraschallwandlers bei Empfang eines Ultraschallsignals mit den Schritten des Anspruchs 1 vorgeschlagen. Einzelne Ausgestaltungen der Erfindung sind Gegenstand der Unteransprüche.

Gemäß dem erfindungsgemäßen Ansatz wird also zunächst das am Ausgang des Ultraschallwandlers anstehende Echosignal differenziert; es wird also der Zeitverlauf des Echosignals nach der Zeit abgeleitet. Damit entsteht ein Ableitungssignal. Um ein Echo im Echosignal zuverlässiger detektieren zu können, wird das Echosignal mit seiner zeitlichen Ableitung multipliziert. Damit wirken sich zeitlich langsamere Anstiege der Amplitude des Echosignals weniger stark aus, so dass nun die schnellen Anstiege im Echosignal noch stärker dominieren. Auf diese Weise können beispielsweise Störungen durch Bodenechos unterdrückt werden. Allerdings "verbreitert" sich im Multiplikationssignal ein Echo.

Der erfindungsgemäße Ansatz besteht nun darin, von dem Ableitungssignal lediglich die Anteile des Zeitverlaufs mit entweder positiven oder negativen Signalamplituden zu verwenden, um das so gebildete Unipolar-Ableitungssignal mit dem Echosignal zu multiplizieren. Dieses Multiplikationssignal kann dann als Basis für die Detektion von Echos herangezogen werden.

Durch die Multiplikation des Echosignals mit dem erfindungsgemäß verwendeten Unipolar-Ableitungssignal ist es nun nicht mehr so ohne Weiteres möglich, die verarbeiteten Signale mit dem ursprünglichen Echosignal zu vergleichen, da durch die Multiplikation deutlich größere Signalamplituden entstehen. Damit die weitere Verarbeitung und Untersuchung des Echosignals auf Echos vereinfacht wird, ist es zweckmäßig, das Multiplikationssignal der Bildung der Quadratwurzel zu unterziehen. Damit weist dann also das derart verarbeitete Multiplikationssignal Signalamplituden auf, die in der gleichen Größenordnung wie die Echosignalamplituden liegen.

Die Differenzierung (zeitliche Ableitung) des Echosignals erfolgt zweckmäßigerweise unter Verwendung eines Hochpassfilters. Andere Bauteile bzw. Schaltungskonzepte zum Differenzieren von elektrischen Signalen sind nach der Erfindung aber ebenso einsetzbar.

Das "Abschneiden" der positiven oder negativen Amplituden des Ableitungssignals erfolgt schaltungstechnisch zweckmäßigerweise mit Hilfe eines Bauteils, das eine Charakteristik wie eine Diode aufweist. Neben einer Diode selbst kommt beispielsweise ein Komparator odgl. Schaltungstechnik in Frage, die die mathematische Funktion $y = max\,(x, 0)$ umsetzt.

In weiterer vorteilhafter Ausgestaltung der Erfindung ist vorgesehen, dass das Unipolar-Ableitungssignal ausschließlich die positiven Anteile des Verlaufs des Ableitungssignals aufweist.

Die Erfindung wird nachfolgend anhand eines Ausführungsbeispiels und unter Bezugnahme auf die Zeichnung näher erläutert. Im Einzelnen zeigen dabei:

Fig. 1    als Blockschaltbild ein Ausführungsbeispiel für die erfindungsgemäß vorgesehenen Hauptkomponenten einer Verarbeitungseinheit zur Umsetzung des erfindungsgemäßen Verfahrens,

Fig. 2    ein Beispiel für ein digitales Hochpassfilter zur Verwendung als Differenzierstufe,

Fig. 3    den Zeitverlauf des Echo- bzw. Messsignals und dessen zeitlicher Ableitung,

Fig. 4    Signalverläufe bei zwei aufeinanderfolgenden Echos im Echosignal,

Fig. 5    ein alternatives digitales Hochpassfilter als Differenzierstufe zur Generierung einer nahezu exakten mathematischen Ableitung des Echosignals,

Fig. 6    Zeitverläufe des Echosignals und seiner Ableitung bei Verwendung des Hochpassfilters gemäß Fig. 5,

Fig. 7    ein Beispiel für die Hauptkomponenten eines differentiell arbeitenden Signalprozessors zur Realisierung des erfindungsgemäßen Verfahrens,

Fig. 8    Signalverläufe an verschiedenen Stellen des Signalprozessors gemäß Fig. 7,

Fig. 9    Signalverläufe eines erfindungsgemäß verwendbaren Signalprozessors gemäß Fig. 7 im Falle ansteigender Störsignale und

Fig. 10   das signaltechnische Verhalten des Signalprozessors gemäß Fig. 7 bei zwei dicht aufeinanderfolgenden Echos im Echo- bzw. Messsignal des Ultraschallwandlers.

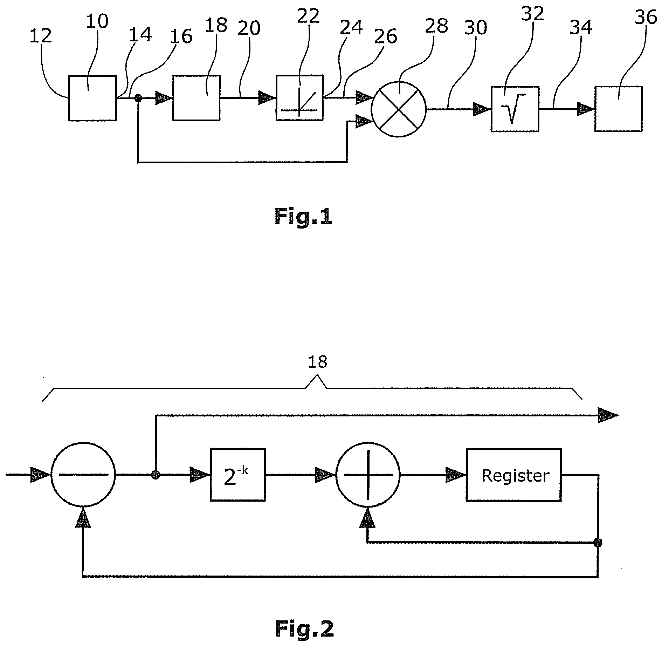

Fig. 1 zeigt auf Blockschaltbildebene ein Ausführungsbeispiel für die Umsetzung des erfindungsgemäßen Verfahrens. Mit 10 ist in Fig. 1 ein Ultraschallwandler bezeichnet, der ein beispielsweise an einem Hindernis reflektiertes Ultraschall-Impulspaket(-Burst-)Echosignal an seinem Eingang 12 empfängt und an seinem Ausgang 14 ein elektrisches Echosignal als Messsignal ausgibt. Dieses Echosignal 16 wird nun in einer Differenzierstufe 18 nach der Zeit abgeleitet. Die Differenzierstufe 18 kann beispielsweise als Hochpassfilter ausgeführt sein. Am Ausgang der Differenzierstufe 18 steht dann das Ableitungssignal 20 an, das einem Filter 22 zugeführt wird. Im Filter 22 werden in diesem Ausführungsbeispiel die Abschnitte des Zeitverlaufs des Ableitungssignals 20 auf null gesetzt, womit ausschließlich die positiven Abschnitte des Verlaufs des Ableitungssignals 20 verbleiben und am Ausgang 24 des Filters 22 ausgegeben werden.

Das derart gefilterte Ableitungssignal, bei dem es sich insoweit um ein Unipolar-Ableitungssignal 26 handelt, wird nun in einer Multiplizierstufe 28 mit dem Echosignal 16, also dem von dem Ultraschallwandler 10 ausgegebenen Messsignal multipliziert, so dass das Multiplikationssignal 30 entsteht. Dieses Multiplikationssignal 30 kann nun einer Quadratwurzelbildung 32 unterzogen werden. Das Ausgangssignal 34 dieser Quadratwurzelbildung wird dann verwendet, um es in einer Auswerteeinheit 36 auf Echos hin zu untersuchen.

Unter bestimmten Bedingungen für den Empfang eines reflektierten Ultraschall-Impulspaket(-Burst-)Echosignals kann es von Vorteil sein, die zeitliche Ableitung des Echosignals zur Signalauswertung mit heranzuziehen. Dies gilt z. B. bei Störungen durch Bodenechos, die zu einem sehr flachen Anstieg und Abfall der Echoamplitude führen. Eine Differenzierung führt daher zu einer besseren Herauslösung des Echos aus derartigen Störsignalen.

Eine Signaldifferenzierung kann mit Hilfe eines Hochpassfilters durchgeführt werden. Ein solches Filter kann z. B. ein FTC-(Fast Time Constant-)Filter sein. Dabei sollte die Zeitkonstante gleich der Burstlänge sein.

$$\tau \approx \tau_P = \frac{N_P}{f_s}$$

Dadurch werden Signale, die länger sind als ein typisches Echosignal, unterdrückt. Ein solches Filter (als Differenzierstufe) sieht z. B. in der digitalen Realisierung wie in Fig. 2 gezeigt aus.

Die Filterkonstante k berechnet sich folgendermaßen:

$$k = log_2(N_p \cdot OSR + 1)$$

Darin sind $N_p$ die Anzahl der Pulse pro Burst, sowie OSR die Anzahl der Abtastwert pro Signalperiode. Für einen typischen Fall mit $N_p$=16 und OSR=8 ergibt sich:

$$k = log_2(16 \cdot 8 + 1) \approx 7$$

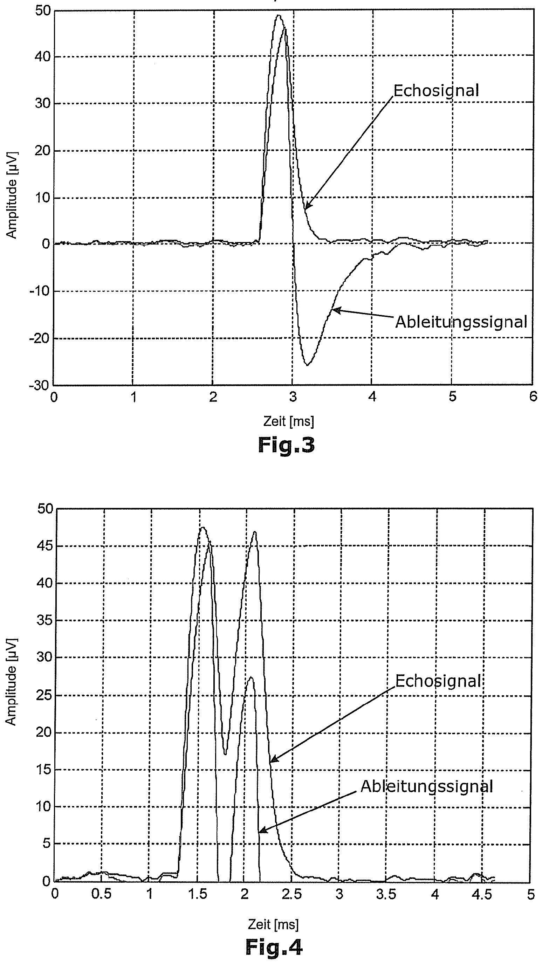

Der Signalverlauf ist in Fig. 3 gezeigt.

Für eine Echoerkennung allein auf Basis der Ableitung würden in der Praxis die negativen Werte des Ableitungssignals nicht verwendet werden, sondern auf null begrenzt.

Grundsätzlich gilt für Ultraschall-Echosignale, dass bei zwei dicht aufeinanderfolgenden Echos das zweite Echo kleiner dargestellt wird und unter Umständen unterhalb des Echodetektions-Schwellwertes fällt (siehe Fig. 4).

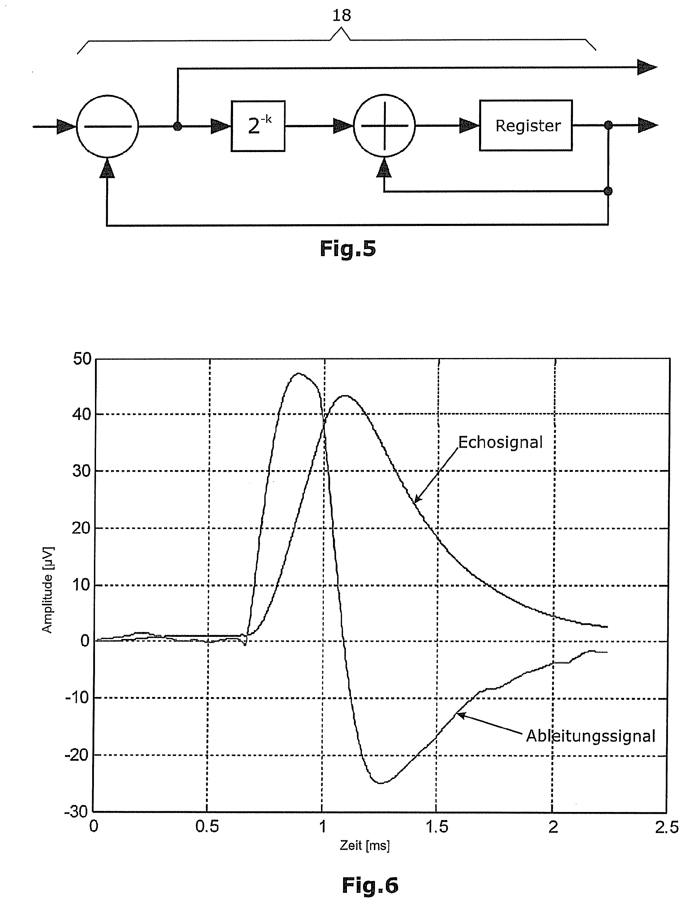

Das abgeleitete Signal kann weiterhin für eine präzise Entfernungsbestimmung verwendet werden, da die Position des Nulldurchgangs von der Amplitudengröße unabhängig ist. Für höchste Ansprüche sollte die Ableitung exakt sein. Dies kann durch die Modifikation gemäß Fig. 5 erreicht werden.

Anhand von Fig. 6 ist deutlich zu erkennen, dass der Nulldurchgang der Ableitung bei Verwendung des Filters nach Fig. 5 als Differenzierstufe nun exakt im Maximum des Echosignals stattfindet.

Ein Hindernis, welches sich in gestörter Umgebung befindet, erscheint bei Auswertung der Ableitung mit geringerer Amplitude. Im Automobilbereich wird in der Regel mit statischen Schwellen gearbeitet, um z. B. Bodenechos auszublenden. Um die Signalamplitude in etwa zu erhalten, kann die Ableitung mit dem Echosignal multipliziert werden.

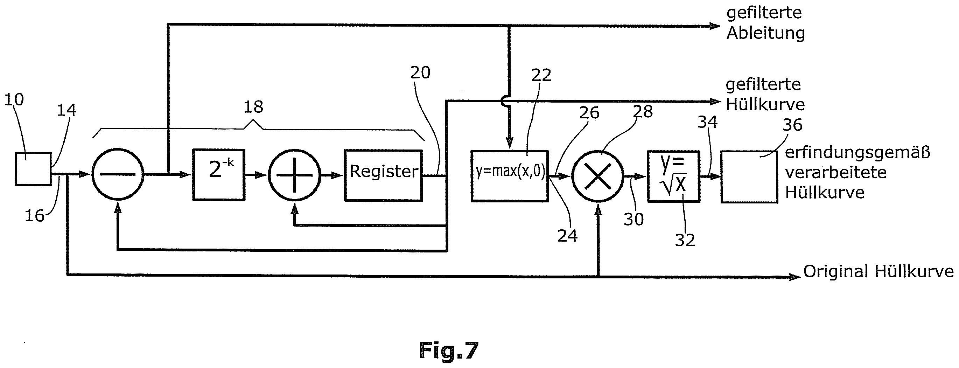

Erfindungsgemäß wird von dem Ableitungssignal lediglich der positive (alternativ lediglich der negative) Anteil verwendet. Ein Beispiel für eine Realisierung auf Blockschaltbildebene zeigt Fig. 7, wobei die Einzelheiten der Fig. 7 mit den gleichen Bezugszeichen wie in Fig. 1 bezeichnet sind, so dass die Korrespondenz der Fign. 1 und 7 zu erkennen ist. Durch den Funktionsblock *y = max (x, 0)* wird also der negative Anteil des Ableitungssignals zu null gesetzt.

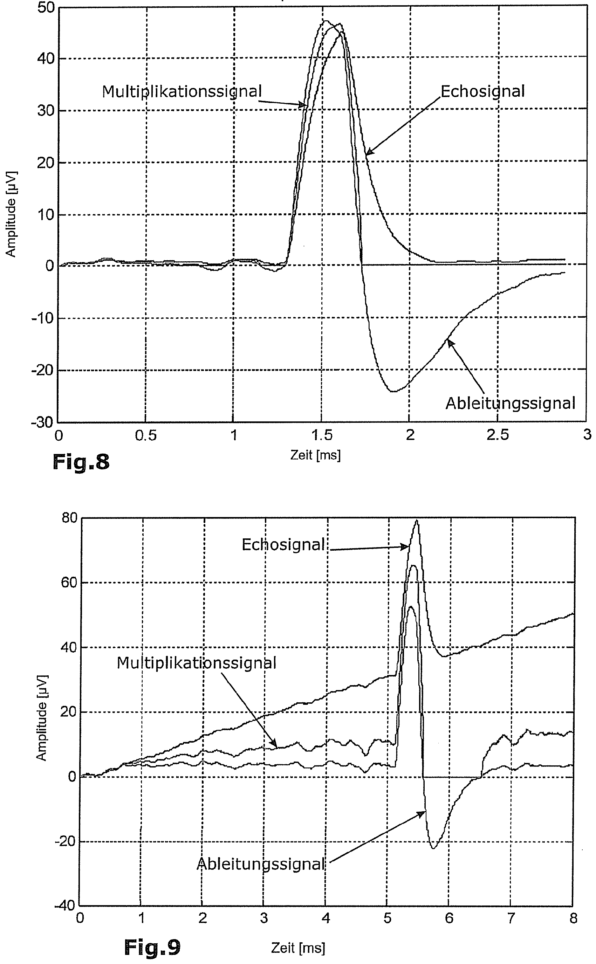

Für eine genaue Positionsbestimmung ist jetzt die Ableitung als separates Signal nicht mehr erforderlich. Es genügt das "geschärfte Echo" nach der Detektion auf "gleich null" zu prüfen, um eine amplitudenunabhängige Laufzeitmessung durchzuführen (siehe Fig. 8). Fig. 9 zeigt Signale eines erfindungsgemäßen Signalprozessors bei ansteigendem Störsignal.

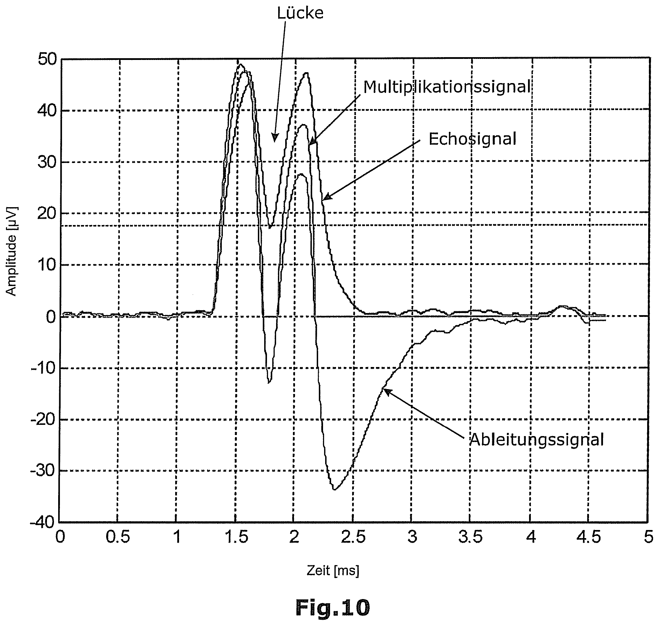

Bei zwei dicht aufeinanderfolgenden Echos ergibt sich erfindungsgemäß zwar weiterhin eine reduzierte Echoamplitude; allerdings entsteht eine eindeutige Lücke (siehe Fig. 10), die eine Unterscheidung/Trennung der beiden Echos ermöglicht.

### BEZUGSZEICHENLISTE

| | |
|---|---|
| 10 | Ultraschallwandler |
| 12 | Eingang des Ultraschallwandlers |
| 14 | Ausgang des Ultraschallwandlers |
| 16 | Echosignal |
| 18 | Differenzierstufe |
| 20 | Ableitungssignal |
| 22 | Filter |
| 24 | Ausgang des Filters |
| 26 | Unipolar-Ableitungssignal |
| 28 | Multiplizierstufe |
| 30 | Multiplikationssignal |
| 32 | Quadratwurzelbildung |
| 34 | Ausgangssignal nach Quadratwurzelbildung |
| 36 | Auswerteeinheit |

**Patentansprüche**

1. Verfahren zur Verarbeitung eines Echosignals eines Ultraschallwandlers bei Empfang eines Ultraschallsignals, mit den folgenden Schritten:

 - Bilden der zeitlichen Ableitung des Zeitverlaufs des Echosignals (16) zur Erzeugung eines Ableitungssignals (20),
 - Filtern des Ableitungssignals (20) durch Setzen von negativen oder positiven Abschnitten des Verlaufs des Ableitungssignals (20) auf null zur Bildung eines Unipolar-Ableitungssignals (26) und
 - Multiplizieren des Echosignals (16) mit dem Unipolar-Ableitungssignal (26) zur Erzeugung eines Multiplikationssignals (30).

2. Verfahren nach Anspruch 1, **gekennzeichnet durch** den weiteren Schritt des Bildens der Quadratwurzel des Multiplikationssignals (30).

**3.** Verfahren nach Anspruch 1 oder 2, **dadurch gekennzeichnet, dass** das Echosignal (16) zur Bildung seiner zeitlichen Ableitung mittels eines Hochpassfilters gefiltert wird.

**4.** Verfahren nach einem der Ansprüche 1 bis 3, **dadurch gekennzeichnet, dass** die Filterung des Ableitungssignals (20) zur Erzeugung des Unipolar-Ableitungssignals (26) mittels eines elektronischen Bauteils mit einer diodenkennlinienähnlichen Charakteristik erfolgt.

**5.** Verfahren nach einem der Ansprüche 1 bis 4, **dadurch gekennzeichnet, dass** das Unipolar-Ableitungssignal (26) ausschließlich die positiven Abschnitte des Verlaufs des Ableitungssignals (20) aufweist.

**6.** Verfahren nach einem der Ansprüche 1 bis 5, **dadurch gekennzeichnet, dass** anhand des Multiplikationssignals (30) oder, sofern gebildet, der Quadratwurzel des Multiplikationssignals (30) eine Auswertung auf Echos durchgeführt wird.

## Claims

**1.** A method for processing an echo signal of an ultrasonic transducer upon reception of an ultrasound signal, comprising the following steps:

- forming the time derivative of the temporal development of the echo signal (16) in order to generate a derivative signal (20),
- filtering the derivative signal (20) by setting negative or positive portions of the development of the derivative signal (20) to zero in order to form a unipolar derivative signal (26), and
- multiplying the echo signal (16) by the unipolar derivative signal (26) in order to generate a multiplication signal (30).

**2.** The method according to claim 1, **characterized by** the further step of forming the square root of the multiplication signal (30).

**3.** The method according to claim 1 or 2, **characterized in that**, for forming a time derivative, the echo signal (16) is filtered by a high-pass filter.

**4.** The method according to any one of claims 1 to 3, **characterized in that** the filtration of the derivative signal (20) for generating the unipolar derivative signal (26) is performed by means of an electronic component having a characteristic similar to a diode characteristic.

**5.** The method according to any one of claims 1 to 4, **characterized in that** the unipolar derivative signal (26) comprises exclusively the positive portions of the development of the derivative signal (20).

**6.** The method according to any one of claims 1 to 5, **characterized in that**, on the basis of the multiplication signal (30) or, if computed, of the square root of the multiplication signal (30), an evaluation for echoes is performed.

## Revendications

**1.** Procédé de traitement d'un signal d'écho d'un transducteur ultrasonore à la réception d'un signal ultrasonore, comprenant les étapes suivantes :

- établissement de la dérivée temporelle de la variation dans le temps du signal d'écho (16) pour produire un signal de dérivée (20),
- filtrage du signal de dérivée (20) par mise à zéro de sections négatives ou positives de la courbe du signal de dérivée (20) pour former un signal de dérivée unipolaire (26), et
- multiplication du signal d'écho (16) par le signal de dérivée unipolaire (26) pour produire un signal de multiplication (30).

**2.** Procédé selon la revendication 1, **caractérisé par** l'étape supplémentaire consistant à former la racine carrée du signal de multiplication (30).

**3.** Procédé selon la revendication 1 ou 2, **caractérisé en ce que** le signal d'écho (16) est filtré à l'aide d'un filtre passe-haut pour former sa dérivée temporelle.

**4.** Procédé selon l'une des revendications 1 à 3, **caractérisé en ce que** le filtrage du signal de dérivée (20) pour générer le signal de dérivée unipolaire (26) s'effectue à l'aide d'un composant électronique ayant une caractéristique similaire à une caractéristique de diode.

**5.** Procédé selon l'une des revendications 1 à 4, **caractérisé en ce que** le signal de dérivée unipolaire (26) présente exclusivement les sections positives de la courbe du signal de dérivée (20).

**6.** Procédé selon l'une des revendications 1 à 5, **caractérisé en ce qu'**à l'aide du signal de multiplication (30) ou, si elle est formée, de la racine carrée du signal de multiplication (30), on procède à une évaluation pour détection d'échos.

**Fig.1**

**Fig.2**

**Fig.3**

**Fig.4**

**Fig.5**

**Fig.6**

gefilterte
Ableitung

gefilterte
Hüllkurve

erfindungsgemäß
verarbeitete
Hüllkurve

Original Hüllkurve

10
14
16
18
$2^{-k}$
Register
20
22
$y=max(x,0)$
26
24
28
30
$y=\sqrt{x}$
32
34
36

**Fig.7**

**Fig.8**

**Fig.9**

EP 3 084 465 B1

Fig.10

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011086397 A
- EP 0142733 A
- US 4243988 A
- EP 1296159 A